# EUROPÄISCHE PATENTANMELDUNG

(11) **EP 1 205 098 A1**
(43) Veröffentlichungstag der Anmeldung: **15.05.2002**
(21) Anmeldenummer: 01126152.6
(22) Anmeldetag: 03.11.2001
(51) Int. Cl.: A01B 73/06

(54) **Landwirtschaftlicher Geräterahmen**

(30) Priorität: 07.11.2000 US 707552
(71) Anmelder: DEERE & COMPANY, Moline, Illinois 61265-8098 (US)
(72) Erfinder: Brueggen, Shane Julius, Ankeny, IA 50021 (US); Menze, Adam Richard, Ankeny, IA 50021 (US); Austin, Michael Jeffrey, Johnston, IA 50131 (US)
(74) Vertreter: Holst, Sönke, Dr.

(57) **Zusammenfassung**

Die Erfindung bezieht sich auf einen landwirtschaftlichen Geräterahmen (20), mit einem Hauptrahmen (26), der eine sich nach vorn erstreckende Zugstange (40) aufweist, mit dem Hauptrahmen (26) in Betriebsverbindung stehenden, auf dem Erdboden abrollenden Rädern (46), sowie einem rechten Flügelrahmenabschnitt (22) und einem linken Flügelrahmenabschnitt (24).

Es wird vorgeschlagen, dass die Zugstange (40) mit einer rechten Rampe (64) und einer linken Rampe (66) versehen ist, und dass ein rechter und ein linker hydraulischer Faltzylinder (72, 74) eingerichtet sind, den rechten und linken Flügelrahmenabschnitt (22, 24) um eine rechte und linke vertikale Schwenklagerung (34, 38) nach vorn zu verschwenken, wenn der Geräterahmen (20) von seiner Arbeitskonfiguration in seine Transportkonfiguration verbracht wird, wobei die rechten und linken Rampeneingriffselemente (60, 62) in die rechte bzw. linke Rampe (64, 66) eingreifen, wodurch die äußeren Enden des rechten und linken Flügelrahmenabschnitts (22, 24) angehoben werden.

## Beschreibung

Die Erfindung betrifft einen landwirtschaftlichen Geräterahmen, der zwischen einer Arbeitskonfiguration, in der er sich quer zu einer Bewegungsrichtung erstreckt, und einer Transportkonfiguration, in der er sich in der Bewegungsrichtung erstreckt, beweglich ist, mit einem Hauptrahmen, der eine sich nach vorn erstreckende Zugstange aufweist, mit dem Hauptrahmen in Betriebsverbindung stehenden, auf dem Erdboden abrollenden Rädern, sowie einem rechten Flügelrahmenabschnitt und einem linken Flügelrahmenabschnitt.

Gezogene Rahmen für landwirtschaftliche Geräte werden verwendet, um beispielsweise Sägeräte, Chemikalienausbringgeräte und Bodenbearbeitungsgeräte abzustützen. Typischerweise haben diese Rahmen eine Arbeitskonfiguration, in der sie sich quer erstrecken, und eine Transportkonfiguration, in der sie sich (in der Fahrtrichtung) längs erstrecken. In den vergangenen Jahren stieg die Arbeitsbreite dieser Rahmen an, um es dem Landwirt zu ermöglichen, eine größere Fläche mit einer einzigen Überfahrt abzudecken. Es ist wichtig, dass sich die Rahmenabschnitte relativ zueinander bewegen, zumindest bis zu einem beschränkten Grad, so dass sie besser den Bodenkonturen folgen können. In der Transportkonfiguration sind die Rahmenabschnitte entlang einer Längsachse ausgerichtet, die parallel Achse der Zugstange ist. Diese schmalere Transportkonfiguration erleichtert den Transport des Rahmens von einem Feld zum anderen.

Eine Bauart dieser Rahmen ist der nach vorn faltbare Rahmen. Ein nach vorn faltbarer Rahmen ist mit rechten und linken Flügelabschnitten ausgestattet, die um eine vertikale Schwenkachse herum nach vorn gefaltet werden. Diese Flügelabschnitte werden dann durch hydraulische Zylinder angehoben und während des Transports untereinander und/oder mit der Zugstange verriegelt. Nach vorn faltbare Rahmen können mit einem mittleren Rahmenabschnitt versehen sein, oder auch nicht, an dem ein landwirtschaftliches Gerät angebracht ist.

Die der Erfindung zugrunde liegende Aufgabe wird darin gesehen, einen verbesserten faltbaren Rahmen für ein landwirtschaftliches Gerät bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der gezogene landwirtschaftliche Geräterahmen weist eine Arbeitskonfiguration auf, in der er sich quer zur Bewegungsrichtung erstreckt, und eine Transportkonfiguration, in der er sich in der Bewegungsrichtung erstreckt. Der Geräterahmen umfasst einen Hauptrahmen und rechte und linke Flügelrahmenabschnitte, die durch rechte und linke Schwenkrahmen aneinander gekoppelt sind. Die Schwenkrahmen sind durch rechte und linke vertikale Schwenklagerungen mit dem Hauptrahmen und durch rechte und linke horizontale Schwenklagerungen mit den Flügelrahmenabschnitten gekoppelt. Die Flügelrahmenabschnitte können durch hydraulische Faltzylinder nach vorn gefaltet werden. Wenn die Flügelrahmenabschnitte nach vorn in Richtung auf die Zugstange zu eingefaltet werden, kommen an den äußeren Enden der Flügelrahmenabschnitte angeordnete linke und rechte Rampeneingriffselemente, bei denen es sich um Walzen handeln kann, mit rechten und linken Rampen, die an der Zugstange angebracht sind, zum Eingriff. Ein weiteres Einziehen der zum Einfalten der Flügelrahmenabschnitte dienenden hydraulischen Faltzylinder hat zur Folge, dass die äußeren Enden der Flügelabschnitte angehoben werden, da sich die Rampeneingriffselemente auf den Rampen nach oben bewegen.

Zwischen dem Hauptrahmen und einem Radrahmen können hydraulische Hubzylinder vorgesehen sein, um den Hauptrahmen anzuheben. Wenn der Hauptrahmen angehoben wird, heben die linken und rechten Schwenkrahmen die inneren Enden des rechten und linken Flügelrahmenabschnitts an.

In der Zeichnung ist ein nachfolgend näher beschriebenes Ausführungsbeispiel der Erfindung dargestellt. Es zeigt:
- Fig. 1: einen aus drei Abschnitten aufgebauten Rahmen eines landwirtschaftlichen Arbeitsgeräts in seiner Arbeitskonfiguration,

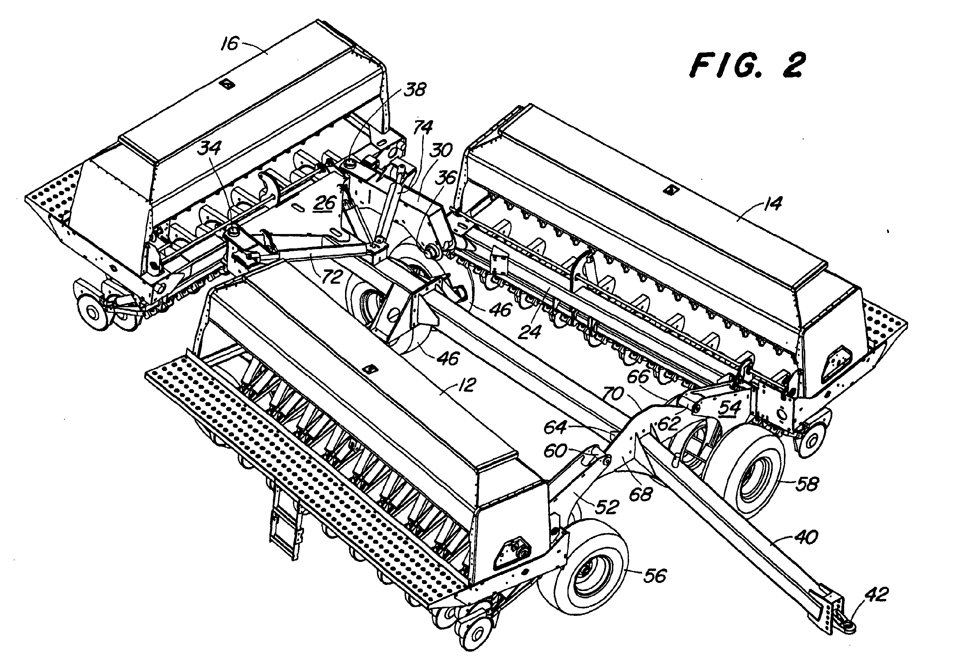

- Fig. 2: einen aus drei Abschnitten aufgebauten Rahmen eines landwirtschaftlichen Arbeitsgeräts in einer Zwischenposition zwischen seiner Arbeitskonfiguration und seiner Transportkonfiguration,
- Fig. 3: einen aus drei Abschnitten aufgebauten Rahmen eines landwirtschaftlichen Arbeitsgeräts in seiner Transportkonfiguration, und
- Fig. 4: einen aus zwei Abschnitten aufgebauten Rahmen eines landwirtschaftlichen Arbeitsgeräts in seiner Arbeitskonfiguration.

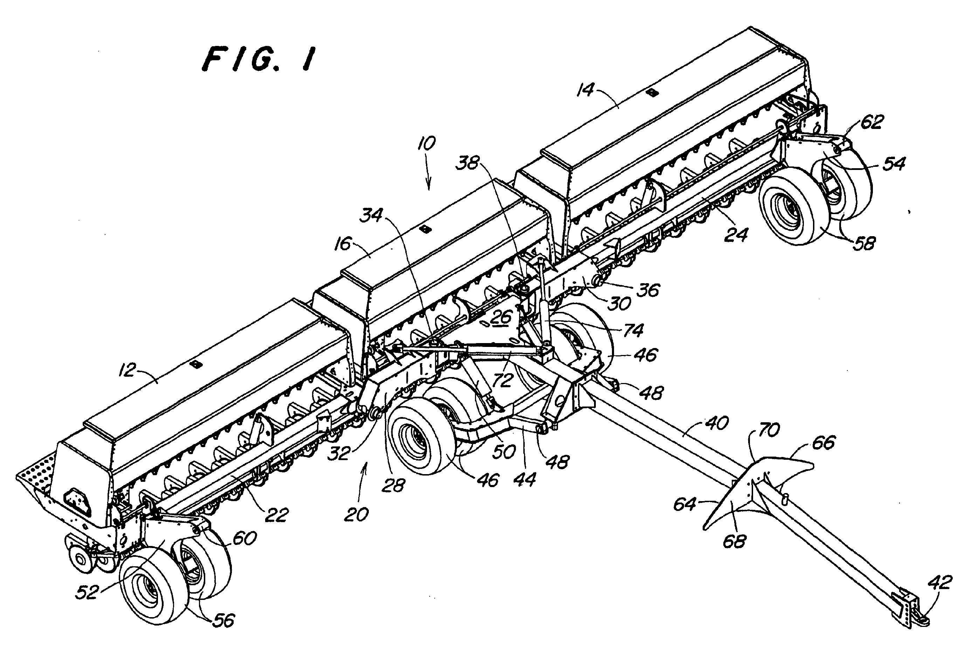

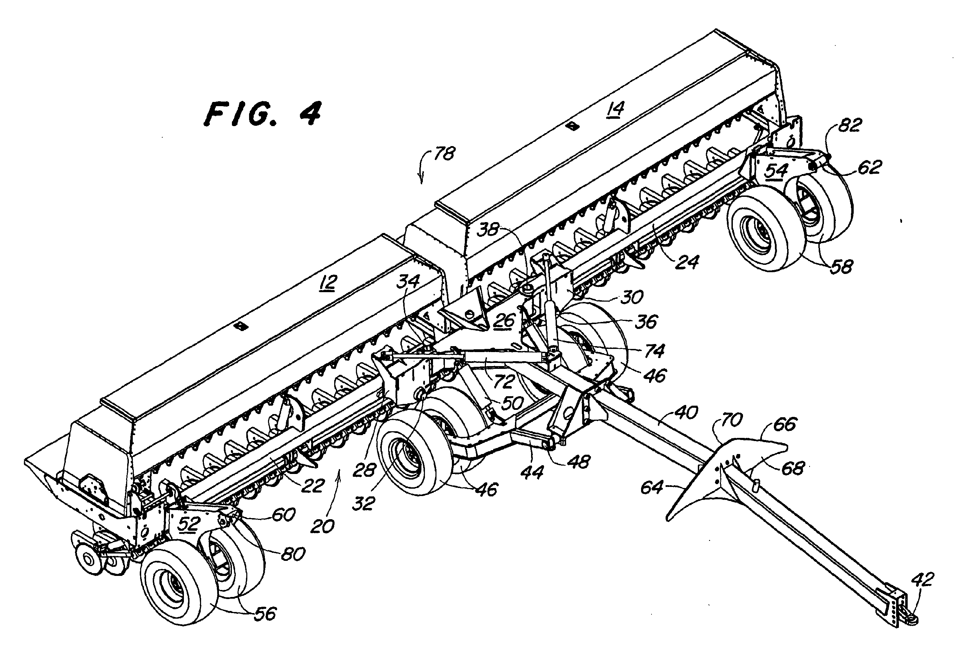

Figur 1 stellt eine Drillmaschine 10 mit drei Arbeitsabschnitten dar, die sich auf einem gezogenen Geräterahmen 20 abstützt. Die Drillmaschine 10 hat rechte und linke Flügelabschnitte 12 und 14 und einen mittleren Abschnitt 16. Die rechten und linken Flügelabschnitte 12 und 14 sind an rechten und linken Flügelrahmenabschnitten 22 und 24 des gezogenen Geräterahmens 20 angebracht. In ähnlicher Weise ist der mittlere Abschnitt 16 am Hauptrahmen 26 des gezogenen Geräterahmens 20 befestigt. Obwohl die Zeichnungen 1 bis 3 den vorliegenden gezogenen Geräterahmen 20 darstellen, wie er ein aus drei Abschnitten aufgebautes landwirtschaftliches Gerät abstützt, kann die vorliegende Erfindung auch an einem aus zwei Abschnitten aufgebauten Gerät verwendet werden, wie in Figur 4 dargestellt. Außerdem kann die vorliegende Erfindung an anderen Säausrüstungen verwendet werden, beispielsweise Reihenpflanzgeräten und pneumatischen Sägeräten, und an anderen landwirtschaftlichen Geräten, beispielsweise Feldkultivatoren und Chemikalienausbringgeräten.

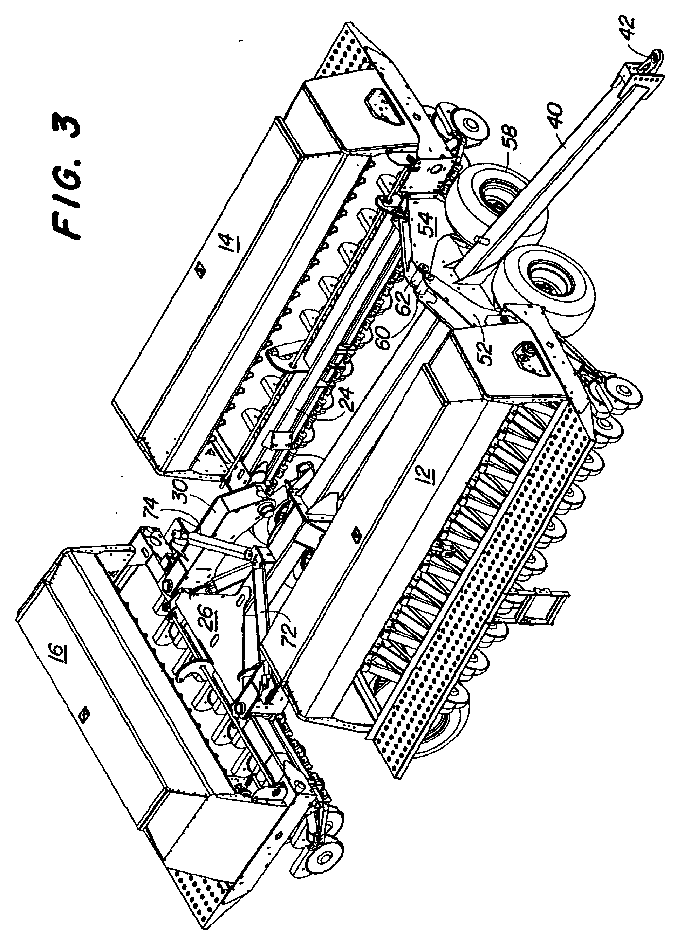

Der rechte und der linke Flügelrahmenabschnitt 22 und 24 sind durch rechte und linke Schwenkrahmen 28 und 30 an den Hauptrahmen 26 gekoppelt. Das innere Ende des rechten Flügelrahmenabschnitts 22 ist durch eine rechte horizontale Schwenklagerung 32 an das erste Ende des rechten Schwenkrahmens 28 gekoppelt. Das andere Ende des rechten Schwenkrahmens 28 ist um eine vertikale Schwenklagerung 34 schwenkbar an den Hauptrahmen 26 gekoppelt. Das innere Ende des linken Flügelrahmenabschnitts 24 ist durch eine linke horizontale Schwenklagerung 36 an das erste Ende des linken Schwenkrahmens 30 gekoppelt. Das andere Ende des linken Schwenkrahmens 30 ist um eine vertikale Schwenklagerung 38 schwenkbar an den Hauptrahmen 26 gekoppelt. Wie in Figur 1 dargestellt, erstrecken sich die Schwenkachsen der rechten und linken horizontalen Schwenklagerungen 32 und 36 parallel zueinander in der Vorwärtsbewegungsrichtung, wenn sich der gezogene Geräterahmen 20 in seiner Arbeitskonfiguration befindet. Wenn sich der gezogene Geräterahmen 20 in seiner Transportkonfiguration befindet, wie in Figur 3 dargestellt, erstrecken sich die Schwenkachsen der rechten und linken horizontalen Schwenklagerungen 32 und 36 quer zur Vorwärtsbewegungsrichtung.

Der Hauptrahmen 26 ist mit einer sich nach vorn erstreckenden Zugstange 40 (Deichsel) ausgestattet. Das vordere Ende der Zugstange 40 ist mit einer Kupplung 42 zur Anbringung an einem Zugfahrzeug (Traktor) ausgestattet. Der Hauptrahmen 26 stützt sich auf einem Radrahmen 44 ab. Der Radrahmen 44 ist mit Rädern 46 ausgestattet, die sich im Eingriff mit dem Erdboden befinden. Der Radrahmen 44 ist durch eine quer angeordnete Schwenklagerung 48 schwenkbar mit dem Hauptrahmen 46 gekoppelt. Zwei hydraulische Hubzylinder 50 erstrecken sich zwischen dem Radrahmen 44 und dem Hauptrahmen 26, um den Hauptrahmen 26 gegenüber dem Radrahmen 44 anzuheben.

Die äußeren Enden der rechten und linken Flügelrahmenabschnitte 22 und 24 sind mit rechten und linken vertikalen Trägern 52 und 54 versehen. Die Unterseiten der rechten und linken vertikalen Träger 52 und 54 sind mit rechten und linken Flügelabschnittsrädern 56 und 58 ausgestattet, die sich im Eingriff mit dem Erdboden befinden. Die Oberseiten der rechten und linken vertikalen Träger 52 und 54 sind mit rechten und linken Rampeneingriffselementen 60 und 62 ausgestattet. In der dargestellten Ausführungsform sind die Rampeneingriffselemente 60 und 62 Walzen, jedoch können die Rampeneingriffselemente andere Konfigurationen aufweisen, wie Lagerplatten und Gleitmechanismen. Die inneren Enden der rechten und linken Flügelrahmenabschnitte 22 und 24 sind über den Hauptrahmen 26 und die rechten und linken Schwenkrahmen 28 und 30 durch Haupträder 46 abgestützt, die sich im Eingriff mit dem Erdboden befinden. Die äußeren Enden des rechten und linken Flügelrahmenabschnitts 22 und 24 sind auf den rechten und linken Flügelabschnittsrädern 56 und 58 abgestützt.

Die Zugstange 40 ist mit einer rechten Rampe 64 und einer linken Rampe 66 ausgestattet, die jeweils aus einer dreieckigen Platte 68 geformt sind. Die dreieckige Platte 68 ist starr an der Zugstange 40 befestigt. Der Scheitel (die Spitze) der dreieckigen Platte 68 ist mit einer Vertiefung 70 versehen, die ein Rastelement bildet. Rechte und linke hydraulische Faltzylinder 72 und 74 werden verwendet, um den rechten und den linken Flügelrahmenabschnitt 22 und 24 um die rechten und linken vertikalen Schwenklagerungen 34 und 38 zu verschwenken. Der rechte und der linke hydraulische Faltzylinder 72 und 74 erstrecken sich zwischen dem Hauptrahmen 26 und dem rechten bzw. linken Schwenkrahmen 28 und 30.

Wenn der Geräterahmen 20 aus seiner Arbeitskonfiguration in seine Transportkonfiguration gefaltet wird, werden die hydraulischen Hubzylinder 50 ausgestreckt, so dass sie den Hauptrahmen 26 anheben, danach werden der rechte und der linke Faltzylinder 72 und 74 eingezogen, so dass der rechte und der linke Flügelrahmenabschnitt 22 und 24 um die rechte und linke Schwenklagerung 34 und 38 nach vorn verschwenken. Die vertikale Bewegung des Hauptrahmens 26 hebt den rechten und linken Schwenkrahmen 28 und 30 und die inneren Enden des rechten und linken Flügelrahmenabschnitts 22 und 24 an. Wenn der rechte und der linke Flügelrahmenabschnitt 22 und 24 nach vorn verschwenkt werden, berühren das rechte und das linke Rampeneingriffselement 60 und 62 die linke und rechte Rampe 64 und 66. Ein weiteres Einziehen des rechten und des linken hydraulischen Faltzylinders 72 und 74 führt dazu, dass die äußeren Enden des rechten und des linken Flügelrahmenabschnitts 22 und 24 auf den Rampen 64 und 66 nach oben angehoben werden. Die Walzen der Rampeneingriffselemente 60 und 62 rollen auf den Rampen 64 und 66 ab und verrasten im Rastelement, das durch die Vertiefung 70 gebildet wird. Geeignete mechanische und/oder hydraulische Arretierungszusammenbauten können verwendet werden, um die Flügelrahmenabschnitte 22 und 24 aneinander und/oder mit der Zugstange 40 zu verrasten. Ein Beispiel eines mechanischen Arretierungszusammenbaus ist in Figur 4 dargestellt und wird im Folgenden diskutiert.

Wie in Figur 4 dargestellt, kann der vorliegende Geräterahmen 20 zum Falten eines aus zwei Abschnitten aufgebauten Arbeitsgeräts 78 verwendet werden. In dieser Ausführungsform sind die Schwenkrahmenabschnitte 28 und 30 kleiner, da sie keinen Raum für den mittleren Abschnitt 16 frei lassen müssen. Der rechte vertikale Träger 52 ist mit einem durch die Schwerkraft vorgespannten Haken 80 versehen, der selbsttätig in eine Bolzenverlängerung 82 der linken Walze 62 eingreift, wenn der Geräterahmen 20 in seine Transportkonfiguration verbracht wird. Der Haken 80 und die Bolzenverlängerung 82 bilden eine Verriegelung, die den rechten Flügelrahmenabschnitt 22 mit dem linken Flügelrahmenabschnitt 24 verriegelt.

Der Geräterahmen 20 wird in umgekehrter Reihenfolge, ggf. nach manuellem oder selbsttätigem Lösen einer Verriegelung, in die Arbeitskonfiguration verbracht.

## Patentansprüche

1. Landwirtschaftlicher Geräterahmen (20), der zwischen einer Arbeitskonfiguration, in der er sich quer zu einer Bewegungsrichtung erstreckt, und einer Transportkonfiguration, in der er sich in der Bewegungsrichtung erstreckt, beweglich ist, mit einem Hauptrahmen (26), der eine sich nach vorn erstreckende Zugstange (40) aufweist, mit dem Hauptrahmen (26) in Betriebsverbindung stehenden, auf dem Erdboden abrollenden Rädern (46), sowie einem rechten Flügelrahmenabschnitt (22) und einem linken Flügelrahmenabschnitt (24),
**dadurch gekennzeichnet, dass** die Zugstange (40) mit einer rechten Rampe (64) und einer linken Rampe (66) versehen ist,
dass ein rechter Schwenkrahmen (28) durch eine rechte vertikale Schwenklagerung (34) mit dem Hauptrahmen (26) gekoppelt ist,
dass der rechte Flügelrahmenabschnitt (22) ein inneres Ende, das durch eine sich horizontal erstreckende rechte Schwenklagerung (32) mit dem rechten Schwenkrahmen (28) gekoppelt ist, und ein äußeres Ende aufweist, das mit einem auf dem Erdboden abrollenden rechten Flügelabschnittsrad (56) und einem rechten Rampeneingriffselement (60) versehen ist,
dass ein linker Schwenkrahmen (30) durch eine linke vertikale Schwenklagerung (38) mit dem Hauptrahmen (26) gekoppelt ist,
dass der linke Flügelrahmenabschnitt (24) ein inneres Ende, das durch eine sich horizontal erstreckende linke Schwenklagerung (36) mit dem linken Schwenkrahmen (30) gekoppelt ist, und ein äußeres Ende aufweist, das mit einem auf dem Erdboden abrollenden linken Flügelabschnittsrad (58) und einen linken Rampeneingriffselement (62) versehen ist,
und ein rechter und ein linker hydraulischer Faltzylinder (72, 74) eingerichtet sind, den rechten und linken Flügelrahmenabschnitt (22, 24) um die rechte und linke vertikale Schwenklagerung (34, 38) nach vorn zu verschwenken, wenn der Geräterahmen (20) von seiner Arbeitskonfiguration in seine Transportkonfiguration verbracht wird, wobei die rechten und linken Rampeneingriffselemente (60, 62) in die rechte bzw. linke Rampe (64, 66) eingreifen, wodurch die äußeren Enden des rechten und linken Flügelrahmenabschnitts (22, 24) angehoben werden.

2. Geräterahmen nach Anspruch 1, **dadurch gekennzeichnet, dass** die Räder (46) an einem Radrahmen (44) befestigt sind, der schwenkbar am Hauptrahmen (26) angelenkt ist, und dass hydraulische Hubzylinder (50) vorgesehen sind, um den Hauptrahmen (26) relativ zum Radrahmen (44) anzuheben.

3. Geräterahmen (20) nach Anspruch 1 oder 2, **dadurch gekennzeichnet, dass** die rechten und linken Rampeneingriffselemente (60, 62) rechte und linke Walzen umfassen.

4. Geräterahmen (20) nach einem der Ansprüche 1 bis 3, **dadurch gekennzeichnet, dass** die rechte und linke Rampe (64, 66) an einer dreieckförmigen, an der Zugstange (40) befestigten Platte (68) vorgesehen sind.

5. Geräterahmen (20) nach einem der Ansprüche 1 bis 4, **dadurch gekennzeichnet, dass** die Rampen (64, 66) einen Scheitel oder eine Spitze aufweisen, der oder die mit einem Rastelement, beispielsweise einer Vertiefung (70), versehen ist, um das rechte und linke Rampeneingriffselement (60, 62) zu arretieren, wenn sich der Geräterahmen (20) in seiner Transportposition befindet.

6. Geräterahmen (20) nach einem der Ansprüche 1 bis 5, **dadurch gekennzeichnet, dass** der Hauptrahmen (26) mit einem Mittelrahmenabschnitt zur Aufnahme eines landwirtschaftlichen Geräts versehen ist.

7. Geräterahmen (20) nach einem der vorhergehenden Ansprüche, **dadurch gekennzeichnet, dass** die Rampen (64, 66) sich quer zur Zugstange (40) erstrecken.

8. Geräterahmen (20) nach einem der vorhergehenden Ansprüche, **dadurch gekennzeichnet, dass** der rechte Faltzylinder (72) zwischen dem Hauptrahmen (26) und dem rechten Schwenkrahmen (28) angeordnet ist, und der linke Faltzylinder (74) zwischen dem Hauptrahmen (26) und dem linken Schwenkrahmen (30) angeordnet ist.

9. Geräterahmen (20) nach einem der Ansprüche 2 bis 8, **dadurch gekennzeichnet, dass** der Hubzylinder (50) zwischen dem Radrahmen (44) und dem Hauptrahmen (26) angeordnet ist.

10. Geräterahmen (20) nach einem der Ansprüche 1 bis 9, **dadurch gekennzeichnet, dass** die äußeren Enden des rechten und linken Flügelrahmenabschnitts (22, 24) mit rechten und linken Trägern (52, 54) versehen sind, an denen die Rampeneingriffselemente (60, 62) angebracht sind.

11. Geräterahmen (20) nach einem der Ansprüche 1 bis 10, **dadurch gekennzeichnet, dass** die äußeren Enden des rechten und linken Flügelrahmenabschnitts (22, 24) mit rechten und linken Trägern (52, 54) versehen sind, an denen die rechten und linken Flügelabschnittsräder (56, 58) angebracht sind.
